# EUROPEAN PATENT APPLICATION

(11) **EP 1 018 389 A2**
(43) Date of publication of application: **12.07.2000**
(21) Application number: 00100066.0
(22) Date of filing: 05.01.2000
(51) Int. Cl.: B23K 11/22

(54) **Procedure for the separation of microfused pieces from their support and means for carrying out the procedure**

(30) Priority: 08.01.1999 IT VI990001
(71) Applicant: Daisy s.r.l., 36016 Thiene (Vicenza) (IT)
(72) Inventor: Dal Dosso, Giuseppe, 36016Thiene(Vicenza) (IT)
(74) Representative: Bettello, Pietro, Dott. Ing.

(57) **Abstract**

A procedure is described for the separation of microfused pieces from their support for use particularly in the jewelry field and in the production of articles made of precious and non-precious material for ornamental purposes in the production of eyeglasses and apparatuses used in dentistry. This procedure is characterized by the fact that the separation of the microfused pieces (1) from the respective peduncle (2) is carried out by a cutting of said peduncle in view of the heat produced by one or a pair of electrodes (4) using the resistivity of the peduncle when electric current goes through.

## Description

### FIELD OF THE INVENTION

This invention relates to a procedure for the separation of microfused products from their support, after the microfusion operation and also to the means capable of carrying out this procedure.

### BACKGROUND OF THE PRIOR ART

It is known that in the microfusion operation, in particular the microfusion carried out in the jewelry field and in the production of articles made of precious and nonprecious material for ornamental purposes, as well as in the production of eyeglasses and apparatuses in the dentistry field, the final step of separation of the microfused pieces from the support constitutes a phase which requires a period of time for the execution which is quite long so that it negatively affects the production rate. In fact, at the present state of the art the operation of separation of the individual microfused pieces is carried out manually with an operator who is provided with mechanical means such as shears, clippers and other similar means and he provides for cutting out the peduncle which connects each piece to the body of the support. Afterwards, always manually, the operator removes each piece at a time and always with mechanical means such as pincers or an abrasive wheel he provides to eliminate the part of the peduncle which was left attached to the piece and to shape the area of rupture on the piece.

### SUMMARY OF THE INVENTION

The object of the present invention is to provide a procedure for the separation of the microfused pieces which is carried out more rapidly than the procedures presently used and which with a single operation makes possible the separation of each piece.

This object is achieved with the so called "taglio a caldo" cutting under heat, that is causing the rupture of the peduncle which supports the microfused piece in an exact spot, due to the heat produced from the exterior and/or taking advantage of the resistivity of the same peduncle when the electric current goes through the latter.

In actual operation the first manner of carrying out the procedure requires the use of one electrode which is placed in the point of cutting of the peduncle. By connecting the electrode to a pole of a generator of electric current and connecting the other pole to the metallic support of the microfused pieces, one achieves an electric circuit which goes through the peduncle to which the microfused piece to be separated is attached.

The novel feature of the invention resides in providing that the electrode be constructed with a material having high electric resistance and a high fusion point such as graphite, alloys of tungsten, molybdenum and other types of a resistive alloy in such a manner that when electric current goes through the electrode it is heated to a high temperature capable of allowing the cutting of the contact area with the peduncle and therefore causing the separation of the microfused piece attached to the peduncle.

A second manner of operation provides the use of two electrodes which are placed one against the other in contact with the peduncle which supports the microfused piece to be separated. Also in this case the two electrodes connected each one to opposite poles of a generator of electric current are fabricated with a material having high electric resistance and a high fusion point such as graphite, alloys of tungsten, molybdenum and other types of resistive alloys in such a manner that when electric current goes through them they are heated to a high temperature so that in addition to the temperature to which the peduncle is brought because of its resistivity, when electric current goes through it, it allows to cut into the contact area with the peduncle and therefore cause the separation of the microfused piece attached to it.

A third manner of carrying out the operation provides the use of two electrodes each one connected to opposite poles of a generator of electric current and constructed with material having a high electric resistance and high fusion point such as graphite, alloys of tungsten, molybdenum, and other types of resistive alloys so that when the electric current goes through them they are heated to a high temperature and the electrodes placed reciprocally in contact and simultaneously, they are also placed in contact with the peduncle so that due to the high heat produced by the two electrodes which are placed one close to the other, it is possible to cut into the zone in contact with the peduncle and therefore cause the separation of the microfused piece.

In actual operation the means to carry out the cutting procedure when heat is applied as described hereinabove consist essentially of a generator of electric current; the generator being provided with a transformer, a power regulator, a temporizer and pincers which support one or two electrodes, the pincers being connected to one or both of the poles of the generator.

The pincers are provided with a grip which is thermally cooled by means of a water circuit and the electrodes are interchangable so as to be able to adapt them to the different forms of the microfused pieces to be separated from the supporting peduncle.

These features as well as other features of the invention will become even more evident by reference to possible embodiments which are provided by illustration and are not limited by reference to the accompanying drawings; of which
Figures 1,2 and 3 show schematically the three different manners of operation of the separation of the microfused piece from the supporting peduncle with the cut under heat of the invention;
Figure 4 shows schematically the three different manners of pincers provided with electrodes capable of operating in three different manners.
Figure 5 shows schematically a possible operation of separation of the microfused pieces from the supporting body which employs the system of cutting under heat of the present invention.

As shown in the figures the microfused pieces (1) are connected by means of a peduncle (2) to the supporting body (3). The separation of each microfused piece (1) from the respective peduncle is achieved by means of electrodes (4) connected to a generator of electric current (5). In the different manners of operation of electrodes (4) there is always passage of electric current which in the point of contact of the electrodes with the peduncle, both due to the resistance which the electrodes offer and also to the resistance in the portion of the peduncle in contact with the electrodes heat is generated which allows the cutting of the peduncle and, therefore, the separation of the microfused piece.

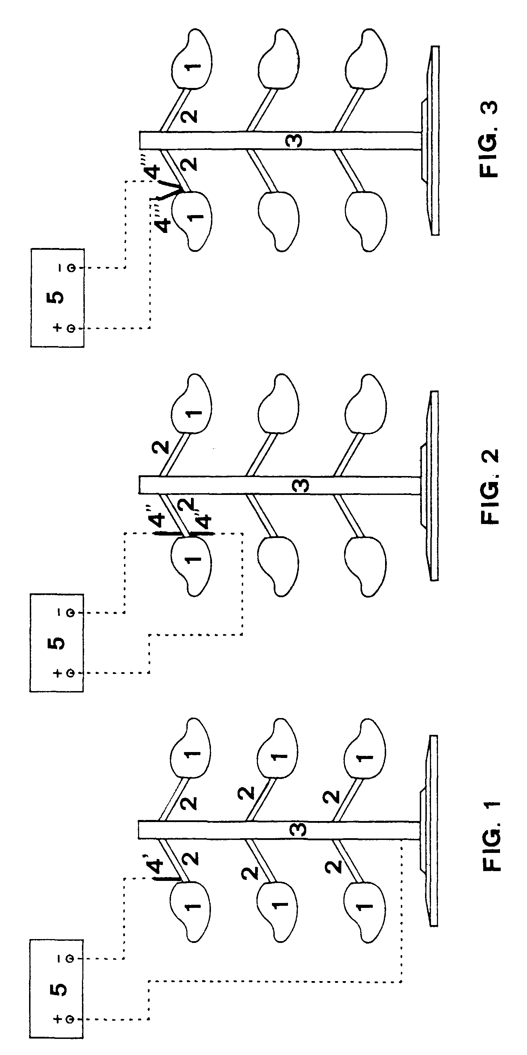

In Figure 1 there is shown the first type of electric circuit in which an electrode 4' is connected to one pole of a generator of electric current (5) while the other pole of the generator is connected to the supporting body (3) to the peduncle and therefore to the supporting peduncle 2'.

Figure 2 shows a second type of electric circuit in which two electrodes 4" are used, each one being connected to a pole of a generator of electric current (5) and which are positioned in contact with the peduncle 2" suitably positioned opposite to it.

Figure 3 shows a third type of electric circuit in which the two electrodes 4''' are connected each one to a pole of the generator of electric current (5) and which are positioned reciprocally in contact between themselves and in contact with the peduncle 2'''.

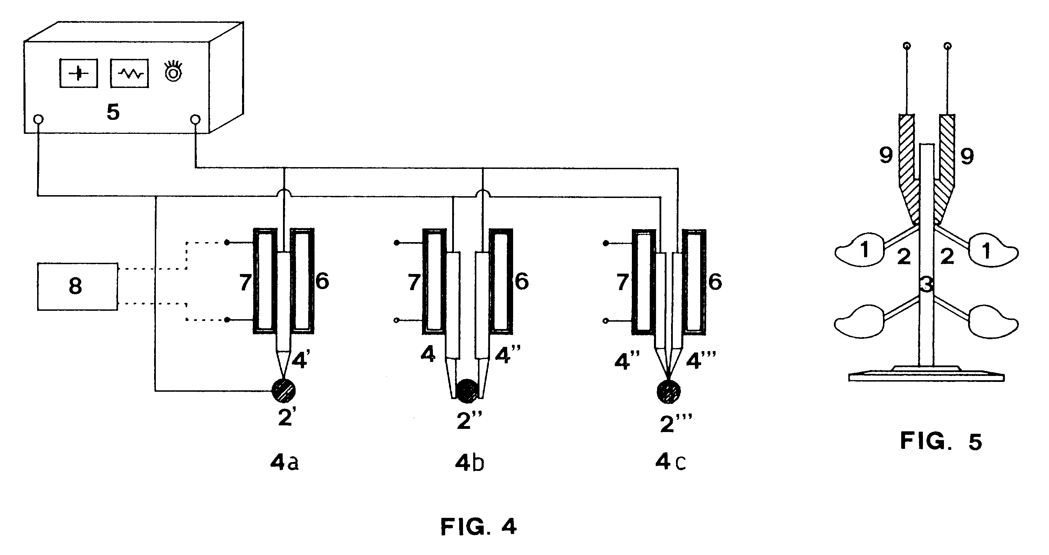

As shown in Figure 4 electrodes (4) are contained within pincers (6) which are provided with a space (7) containing water connected to a cooling system (8).

In the constructive embodiment (4a) there is used pincers 6' provided with a single electrode 4' placed in contact with the peduncle 2'.

In the constructive embodiment (4b) there is used pincers (6") provided with two electrodes (4") reciprocally placed at a distance and placed in contact with peduncle (2").

In the constructive embodiment (4c) there is used pincers (6''') 3' provided with two electrodes (4''') reciprocally approaching one to the other and in contaact with peduncle (2''').

Figure 5 shows the possibility of separating rapidly and automatically the peduncles (2) which have been separated from the microfused pieces from the body (3) due to the use of two electrodes (9) through which electric current goes, the two electrodes (9) sliding along the body (3) cause the cutting of the peduncles.

## Claims

1. A process for the separation of the pieces of microfusion from their supports for use particularly in the jewelry field and in the field of production of articles made of precious and nonprecious material for ornamental purposes, in the production of eyeglasses and in the dentistry apparatuses, said process being characterized by the fact that the separation of the microfused pieces (1) from the respective supporting peduncle (2) is achieved by cutting said peduncle, preferably in the point of union with each of said pieces, said cutting being made possible in view of the heat produced by one electrode or a pair of electrodes (4), said electrodes being connected to the opposite poles of a generator of electric current (5) and/or using the resistivity of said peduncle when electric current goes through said peduncle.

2. The process for the separation of the microfused pieces from the their support according to claim 1 characterized by the fact that each electrode (4) is made of material having high electric resistance and high fusion point, said material being graphite, alloys of tungsten, alloys of molybdenum and alloys of other types of resistive alloys whereby when electric current goes through each electrode, said electrode is heated to an elevated temperature whereby the cutting of the contact area of each microfused piece with said peduncle is carried out and the separation of the microfused piece attached to the peduncle takes place.

3. The process according to claims 1 and 2 characterized by the fact that an electrode (4') is connected to one pole of a generator of electric current (5) and the other pole of said generator is connected with body (3) supporting said peduncles (2'), said peduncles being attached to said microfused pieces.

4. The process according to claims 1 and 2 characterized by the fact that two electrodes (4") are used, each electrode being connected to one pole of the generator of electric current (5), said electrodes being positioned in contact with each peduncle (2") and being placed one opposite to the other.

5. The process according to claims 1 and 2 characterized by the fact that two electrodes (4''') are connected each one to a pole of the generator of electric current (5) and are disposed reciprocally in contact between themselves and in contact with the peduncle (2''') to be cut.

6. The means for carrying out the procedure according to one or more claims 1-5 characterized by the fact that the generator of electric current comprises at least one transformer, a power regulator and a temporizer.

7. The means for carrying out the procedure for the separation of microfused pieces from their supports as described in one or more claims 1-5 characterized by the fact that the single electrodeor the pair of electrodes (4) are contained within pincers (6), said pincers having a grip, said grip being thermally insulated, said grip being preferably cooled by means of water (7), said water being placed in a space, said water being connected with a cooling system (8).

8. The means for carrying out the procedure for the separation of the microfused pieces for their supports as described in one or more claims 1-5 characterized by the fact that it comprises two electrodes (9), electric current going through said electrodes and said electrodes being capable of sliding along body (3) causing the cutting of said peduncles (2).
